# EUROPÄISCHE PATENTSCHRIFT

(11) **EP 0 830 986 B1**
(45) Veröffentlichungstag und Bekanntmachung des Hinweises auf die Patenterteilung: **15.01.2003**
(21) Anmeldenummer: 97113378.0
(22) Anmeldetag: 02.08.1997
(51) Int. Cl.: B60R 7/10

(54) **Kleiderhakeneinrichtung, insbesondere für den Innenraum von Fahrzeugen**
Coat-hook, in particular for vehicle interiors
Cintre, en particulier pour l'habitacle d'un véhicule automobile

(30) Priorität: 21.08.1996 DE 29614470 U
(43) Veröffentlichungstag der Anmeldung: 25.03.1998
(73) Patentinhaber: Utescheny AG, 75059 Zaisenhausen (DE)
(72) Erfinder: Gass, Dirk, 76703 Kraichtal (DE); Jambor, Robert, 68775 Ketsch (DE)
(74) Vertreter: Clemens, Gerhard, Dr.-Ing.

(56) Entgegenhaltungen:
- GB-A- 2 288 450
- US-A- 4 432 254
- US-A- 4 720 028
- PATENT ABSTRACTS OF JAPAN vol. 1997, no. 02, 28. Februar 1997 (1997-02-28) & JP 08 282385 A (HOWA KASEI KK), 29. Oktober 1996 (1996-10-29)

## Beschreibung

### TECHNISCHES GEBIET

Die vorliegende Erfindung betrifft eine Kleiderhakeneinrichtung bevorzugt für den Innenraum von Fahrzeugen, mit einem von einer Öffnungsstellung zu einer Schließstellung und umgekehrt drehbaren Kleiderhakenelement, wobei das Kleiderhakenelement mittels einer in einem Gehäuse vorhandenen Drehachse drehbar gelagert ist, ein elastisches Federelement vorhanden ist, das auf das Kleiderhakenelement in Öffnungsrichtung einwirkt und das Kleiderhakenelement in Schließstellung gegen Öffnen gesichert ist.

### STAND DER TECHNIK

Es sind Kleiderhaken für den Innenraum von Fahrzeugen bekannt, die im Dachhaltegriff starr integriert vorhanden sind. Diese Kleiderhaken können entweder angespritzt, nachträglich angesteckt oder Ultraschall-verschweißt sein. Darüber hinaus sind Kleiderhaken bekannt, die als separates Bauteil starr an der sogenannten B-Säule eines Kraftfahrzeuges befestigt sind.

Des weiteren sind bewegliche Kleiderhaken bekannt, die in der Dachrahmen-Verkleidung angebracht sind. Diese beweglichen Kleiderhaken weisen einen relativ komplizierten Öffnungs- und Schließmechanismus mit mehreren Kunststoff- und Metallteilen auf. Diese Kleiderhaken erfordern einen relativ hohen Montageaufwand und sind hinsichtlich einer späteren Entsorgung wegen der unterschiedlichen Materialien nicht unproblematisch.

Der Kunststoffhaken ist im Kunststoffgehäuse durch einen Stahlbolzen mit Sicherungsring drehbar gelagert. Die Drehbewegung wird durch eine innenliegende Drehfeder ausgeführt, die sich an einem Zapfen im Haken und an der Gehäusewand abstützt. In geöffneter Stellung ist die Mechanik der Feder und der Endanschlag des Hakens sichtbar. Um das Anschlaggeräusch zu dämpfen, ist auf den Haken ein Moosgummi aufgeklebt. Ein derartiger Kunststoffhaken besteht aus einer relativ großen Anzahl an Bauteilen.

Eine gattungsgemäße Kleiderhakeneinrichtung ist in dem deutschen Gebrauchsmuster G 94 05 306.5 beschrieben.

### DARSTELLUNG DER ERFINDUNG

Der vorliegenden Erfindung liegt, ausgehend von dem genannten Stand der Technik, die Aufgabe beziehungsweise das technische Problem zugrunde, eine verbesserte Kleiderhakeneinrichtung anzugeben, die einen zuverlässigen Öffnungs- und Schließvorgang gewährleistet, wobei diese Vorgänge möglichst geräuscharm stattfinden sollen, ein optisch ansprechendes Design ermöglichen, und die Möglichkeit einer wirtschaftlichen Montage beziehungsweise Herstellung eröffnen, insbesondere eine Verringerung der einzelnen Bauteile erzielt wird.

Die erfindungsgemäße Kleiderhakeneinrichtung ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Kleiderhakeneinrichtung zeichnet sich demgemäß dadurch aus, daß eine Bremseinrichtung vorhanden ist, die auf die Drehachse einwirkt und beim Öffnungsvorgang eine gedämpfte Drehbewegung des Kleiderhakenelements bewirkt, und ein Bereich der Drehachse vorhanden ist, der durch die Wandung des Gehäuses nach außen geführt ist und auf diesen Bereich die außen an dem Gehäuse angeordnete Bremseinrichtung einwirkt, wobei die Bremseinrichtung bevorzugt als die innere Reibung eines viskosen Mediums ausnützendes System, insbesondere Silikonbremse ausgebildet ist.

Eine einfache konstruktive Umsetzung ist dadurch gewährleistet, daß die Drehachse als Kunststoffbolzen ausgebildet ist.

In einer bevorzugten Ausgestaltung ist an dem nach außen überstehenden Bereich ein Zahnsegment vorhanden - bevorzugt angespritzt -, das in entsprechende in der Bremseinrichtung vorhandene Ausnehmungen, insbesondere Zahnräder, eingreift.

Nach einer weiteren bevorzugten Weiterbildung ist an dem nach außen überstehenden Bereich eine Kurbel angeordnet - bevorzugt angespritzt -, die in einer Kurve eines außen an dem Gehäuse angeordneten Steuerstückes geführt wird.

Aufgrund der Verwendung einer Silikonbremse, die eine gedämpfte Drehbewegung bewirkt und ein Standardbauteil darstellt, kann durch Wahl verschiedener Dämpfungsfaktoren die Dämpfungsbewegung variabel eingestellt werden.

Eine insbesondere hinsichtlich eines ansprechenden Designs bevorzugte Ausgestaltung der erfindungsgemäßen Kleiderhakeneinrichtung zeichnet sich dadurch aus, daß an das Kleiderhakenelement im Bereich vor der Drehachse eine Vorsprungseinheit angeformt ist, die die Drehachse und das Federelement im geöffneten Zustand optisch verdeckt.

Dadurch, daß die gedämpfte Drehbewegung so konstruktiv umgesetzt wird, daß die zur Erzeugung dieser gedämpften Drehbewegung benötigen Bauteile außen an dem Gehäuse vorhanden sind und gleichzeitig im Bereich der Drehachse vor derselben eine Vorsprungseinheit angeformt ist, ist der gesamte Rastbeziehungsweise Bewegungsmechanismus im eingebauten Zustand bei geöffnetem Kleiderhakenelement praktisch nicht sichtbar. Durch das Anspritzen des Zahnelements in der Kurbel an den nach außen geführten Bereich des Bolzens (Drehachse) und die konstruktiv einfache Befestigung der Bremse und des Steuerstückes außenseitig am Gehäuse läßt sich eine Kleiderhakeneinrichtung umsetzen, die wirtschaftlich herstellbar ist und eine verringerte Anzahl an Bauteilen besitzt.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:

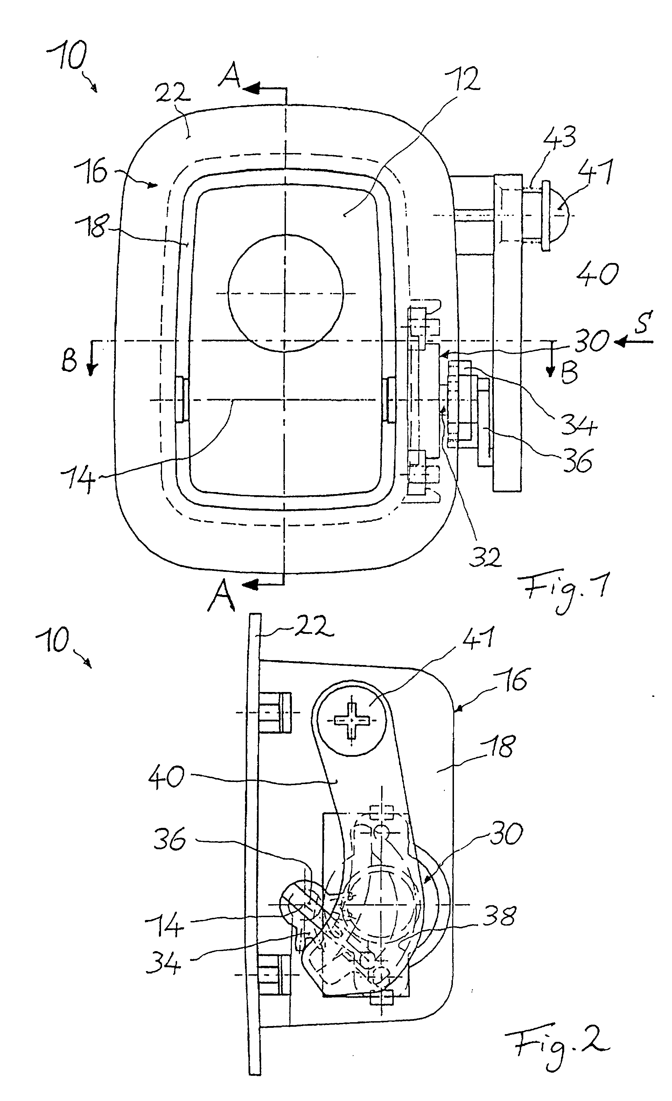

- Fig. 1: schematische Vorderansicht einer Kleiderhakeneinrichtung mit Kleiderhakenelement in Schließstellung,
- Fig. 2: schematische Seitenansicht der Kleiderhakeneinrichtung gemäß Fig. 1 in Pfeilrichtung S,

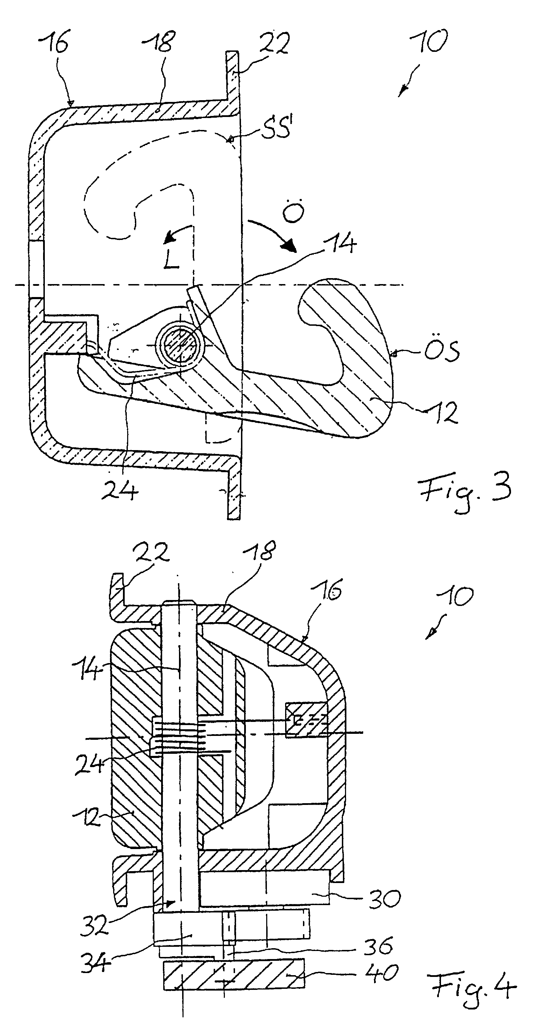

- Fig. 3: schematischer Schnitt der Kleiderhakeneinrichtung gemäß Fig. 1 in geöffnetem Zustand entlang Schnittlinie A-A und
- Fig. 4: schematischer Schnitt durch die Kleiderhakeneinrichtung gemäß Fig. 1 entlang Schnittlinie B-B

### WEGE ZUM AUSFÜHREN DER ERFINDUNG

Eine Kleiderhakeneinrichtung 10 besitzt ein Gehäuse 16 mit einer wannenförmigen Wandung 18, wobei die Wandung 18 einen umlaufenden nach außen weisenden Vorsprung 22 besitzt. Eine derartige Kleiderhakeneinrichtung wird in den in den Figuren nicht dargestellten Dachhimmel eines Fahrzeuges eingebaut, wozu der Dachhimmel entsprechend angepaßte Ausnehmungen zur Aufnahme der Einrichtung 10 besitzt.

Innerhalb des Gehäuses 16 ist ein Kleiderhakenelement 12 vorhanden, das an einer Drehachse 14 drehbar gelagert ist, die als Kunststoffbolzen 14 ausgebildet ist.

Die Öffnungsfunktion des Kleiderhakenelements 12 wird durch einen Fingerdruck ausgelöst, durch den das Kleiderhakenelement 12 zunächst ca. 15 Grad in das Gehäuse 16 einschwenkt (Pfeil L) . Nach dem Loslassen des Kleiderhakenelements 12 klappt dieses aus dem Gehäuse 16 in einer Drehbewegung heraus. Diese Drehbewegung erfolgt erfindungsgemäß als gedämpfte Drehbewegung. Das Kleiderhakenelement 12 rastet nach der Schließbewegung wieder in Endstellung ein.

Der Rastmechanismus des Hakenelements 12 befindet sich auf der Außenseite des Gehäuses 16, d. h. im eingebauten Zustand ist er praktisch nicht sichtbar.

Der Bolzen 14 besitzt einen Bereich 32, der die Wandung 18 des Gehäuses 16 durchstößt und dadurch einen überstehenden Bereich 32 bildet. An diesem überstehenden Bereich 32 ist einerseits ein zusätzliches Zahnsegment 34 und eine Kurbel 36 angespritzt. Das Zahnsegment 34 greift in entsprechende Ausnehmungen eines Zahnrades 35 einer außenseitig auf das Gehäuse 16 aufgeklipsten Bremseinrichtung 30, die als Silikonbremse ausgebildet ist, ein. Dadurch führt das Kleiderhakenelement 12 beim Öffnungsvorgang eine gedämfpte Drehbewegung durch. Durch die gedämpfte Bewegung ist kein weicher Endanschlag nötig, wie bei bekannten Kleiderhakeneinrichtungen.

Ursächlich für die Öffnung des Kleiderhakenelements 12 nach dem Lösen durch Fingerdruck (Pfeil L) ist eine um den Bolzen 14 herumgeführte Drehfeder 24, die sich einerseits am Gehäuse 16 und andererseits an dem Kleiderhakenelement 12 abstützt. Im Bereich vor dem Bolzen 14 ist an das Kleiderhakenelement 12 eine Vorsprungseinheit 22 angeformt, die den Bolzen 14 und die Drehfeder 24 verdeckt.

Durch die verdeckte Drehfeder 24 und das außen angespritzte Zahnsegment 34 des Bolzens 14 wird erreicht, daß in geöffneter Stellung (ÖS) des Kleiderhakenelements 12 keine Steuermechanik oder Endanschläge zu sehen sind.

Über der Bremseinrichtung 30 ist ein Steuerstück 40 mit einer einfachen Druckfeder und Schraube außenseitig am Gehäuse 16 über eine Schraube 41 mit Druckfeder 43 angeschlossen. Die an dem Bolzen 14 angespritzte Kurbel 36 wird in einer an dem Steuerstück 40 vorhandenen Herzkurve 38 geführt beziehungsweise das Steuerstück 40 bewegt, wobei die Kurve 38 so ausgebildet ist, daß das Kleiderhakenelement 12 in Schließstellung (SS) gegen Öffnen gesichert ist.

Durch die dargestellte Ausbildung der Rast- und Bremsmechanik ist diese in eingebautem Zustand nicht sichtbar. Zudem sind infolge der Vorsprungseinheit 22 die Drehfeder 24 und der Bolzen 14 nicht sichtbar. Insgesamt besteht die Kleiderhakeneinrichtung 10 inklusive Bremseinrichtung 30 aus acht Teilen,während hingegen die im Stand der Technik genannte Einrichtung elf Teile besitzt.

## Patentansprüche

1. Kleiderhakeneinrichtung (10), bevorzugt für den Innenraum von Fahrzeugen, mit einem von einer Öffnungsstellung (ÖS) zu einer Schließstellung (SS) und umgekehrt drehbaren Kleiderhakenelement (12), wobei
- das Kleiderhakenelement (12) mittels einer in einem Gehäuse (16) vorhandenen Drehachse (14) drehbar gelagert ist,
- ein elastisches Federelement (24) vorhanden ist, das auf das Kleiderhakenelement (12) in Öffnungsrichtung (Ö) einwirkt und
- das Kleiderhakenelement (12) in Schließstellung (SS) gegen Öffnen gesichert ist,
**dadurch gekennzeichnet, daß**
- eine Bremseinrichtung (30) vorhanden ist, die auf die Drehachse (14) einwirkt und dadurch beim Öffnungsvorgang eine gedämpfte Drehbewegung des Kleiderhakenelements (12) bewirkt, und
- ein Bereich (32) der Drehachse (14) vorhanden ist, der durch die Wandung (18) des Gehäuses (16) nach außen geführt ist und auf diesen Bereich (32) die außen an dem Gehäuse (16) angeordnete Bremseinrichtung (30) einwirkt.

2. Einrichtung nach Anspruch 1,
**dadurch gekennzeichnet, daß**
- die Bremseinrichtung (30) als die innere Reibung eines viskosen Mediums ausnützendes System, insbesondere Silikonbremse ausgebildet ist.

3. Einrichtung nach Anspruch 1 und/oder 2,
**dadurch gekennzeichnet, daß**
- die Drehachse (14) als Kunststoffbolzen ausgebildet ist.

4. Einrichtung nach einem oder mehreren der vorstehenden Ansprüche,
**dadurch gekennzeichnet, daß**
an dem nach außen überstehenden Bereich (32) der Drehachse (14) ein Zahnsegment (34) angeordnet ist, das in entsprechende an der Bremseinrichtung (30) vorhandene Ausnehmungen eingreift.

5. Einrichtung nach einem oder mehreren der vorstehenden Ansprüche,
**dadurch gekennzeichnet, daß**
- an dem nach außen überstehenden Bereich (32) eine Kurbel (36) angeordnet ist, die in einer Kurve (38) eines außen am Gehäuse (16) angeordneten Steuerstücks (40) geführt wird.

6. Einrichtung nach einem oder mehreren der vorstehenden Ansprüche,
**dadurch gekennzeichnet, daß**
- die Dämpfungsbewegung der Einrichtung für den Öffnungsvorgang einstellbar ist.

7. Einrichtung nach einem oder mehreren der vorstehenden Ansprüche,
**dadurch gekennzeichnet, daß**
- an das Kleiderhakenelement (12) im Bereich vor der Drehachse (14) eine Vorsprungseinheit (42) angeformt ist, die die Drehachse (14) und das Federelement (24) im geöffneten Zustand optisch verdeckt.

## Claims

1. Coat-hook device (10), preferably for the interior of vehicles, having a coat-hook element (12) which can be rotated from an open position (ÖS) to a closed position (SS) and vice versa,
- the coat-hook element (12) being mounted rotatably by means of an axis of rotation (14) present in a housing (16),
- there being an elastic spring element (24) which acts on the coat-hook element (12) in the opening direction (Ö), and
- the coat-hook element (12) being secured against opening in the closed position (SS),
**characterized in that**
- there is a braking device (30) which acts on the axis of rotation (14) and thereby brings about a damped rotational movement of the coat-hook element (12) during the opening process, and
- there is a region (32) of the axis of rotation (14), which region is guided outwards through the wall (18) of the housing (16) and the braking device (30), which is arranged on the outside of the housing (16), acts on this region (32).

2. Device according to Claim 1,
**characterized in that**
- the braking device (30) is designed as the internal friction of a system utilizing a viscous medium, in particular a silicon brake.

3. Device according to Claim 1 and/or 2,
**characterized in that**
- the axis of rotation (14) is designed as a plastic bolt.

4. Device according to one or more of the preceding claims,
**characterized in that** a toothed segment (34) is arranged on that region (32) of the axis of rotation (14) which protrudes outwards, which toothed segment engages in corresponding recesses on the braking device (30).

5. Device according to one or more of the preceding claims,
**characterized in that**
- a crank (36) is arranged on the outwardly protruding region (32), which crank is guided in a curve (38) of a control element (40) arranged on the outside of the housing (15).

6. Device according to one or more of the preceding claims,
**characterized in that**
- the damping movement of the device for the opening process can be adjusted.

7. Device according to one or more of the preceding claims,
**characterized in that**
- a projection unit (42) is integrally formed on the coat-hook element (12) in the region in front of the axis of rotation (14), which unit visually conceals the axis of rotation (14) and the spring element (24) in the opened state.

## Revendications

1. Cintre (10), de préférence pour l'habitacle d'un véhicule automobile, pourvu d'un élément-patère (12) pouvant être pivoté d'une position d'ouverture (ÖS) en une position de fermeture (SS), et inversement, dans lequel
- l'élément-patère (12) est logé de façon pivotante au moyen d'un axe de rotation (14) prévu dans un coffret (16),
- un élément de ressort élastique (24) est prévu, qui agit sur l'élément-patère (12) en direction d'ouverture (Ö), et
- l'élément-patère (12), en position de fermeture (SS), est sécurisé contre une ouverture,
**caractérisé en ce qu'**un dispositif de freinage (30) est prévu, qui agit sur l'axe de rotation (14) et qui de ce fait génère lors du processus d'ouverture un mouvement de rotation amorti de l'élément-patère (12), et **en ce qu'**une zone (32) de l'axe de rotation (14) est prévue, qui est guidée vers l'extérieur par la paroi (18) du coffret (16) et **en ce que** le dispositif de freinage (30) disposé à l'extérieur du coffret (16) agit sur cette zone (32).

2. Cintre selon la revendication 1, **caractérisé en ce que** le dispositif de freinage (30) est conçu sous la forme d'un système exploitant le frottement intérieur d'un milieu visqueux, en particulier sous la forme d'un frein à base de silicone.

3. Cintre selon la revendication 1 et/ou 2, **caractérisé en ce que** l'axe de rotation (14) est conçu sous la forme d'un boulon en plastique.

4. Cintre selon une ou plusieurs des revendications précédentes, **caractérisé en ce qu'**un segment denté (34) est disposé au niveau de la zone dépassant vers l'extérieur (32) de l'axe de rotation (14), qui s'emboîte dans des creux prévus de façon appropriée dans le dispositif de freinage (30).

5. Cintre selon une ou plusieurs des revendications précédentes, **caractérisé en ce qu'**une manivelle (36) est disposée au niveau de la zone dépassant vers l'extérieur (32), qui est guidée dans une came (38) d'un élément de commande (40) disposé à l'extérieur du coffret (16).

6. Cintre selon une ou plusieurs des revendications précédentes, **caractérisé en ce que** le mouvement d'amortissement du dispositif est réglable pour l'opération d'ouverture.

7. Cintre selon une ou plusieurs des revendications précédentes, **caractérisé en ce qu'**un élément faisant saillie (42) est formé au niveau de l'élément-patère (12) dans la zone située avant l'axe de rotation (14), qui en position ouverte recouvre optiquement l'axe de rotation (14) et l'élément de ressort (24).
